# EUROPÄISCHE PATENTSCHRIFT

(11) **EP 0 492 149 B1**
(45) Veröffentlichungstag und Bekanntmachung des Hinweises auf die Patenterteilung: **01.02.1995**
(21) Anmeldenummer: 91120109.3
(22) Anmeldetag: 26.11.1991
(51) Int. Cl.: B01D 9/00, B01J 2/26

(54) **Verfahren und Vorrichtung zum Reinigen chemischer Substanzen**
Process and apparatus for cleaning chemical substances
Procédé et dispositif pour nettoyer des substances chimiques

(30) Priorität: 22.12.1990 DE 4041669
(43) Veröffentlichungstag der Anmeldung: 01.07.1992
(73) Patentinhaber: Santrade Ltd., CH-6002 Luzern (CH)
(72) Erfinder: Schermutzki, Konrad, W-7148 Remseck 3 (DE); Würmseher, Herbert, Dr.-Ing., W-8901 Meitingen (DE)
(74) Vertreter: Wilhelm & Dauster Patentanwälte European Patent Attorneys

(56) Entgegenhaltungen:
- EP-A- 0 183 318
- EP-A- 0 253 661
- EP-A- 0 488 953
- DE-A- 1 917 089
- FR-A- 2 549 385

## Beschreibung

Die Erfindung betrifft ein Verfahren und eine Vorrichtung zum Reinigen chemischer Substanzen, die zunächst geschmolzen und unter Wärmeentzug auskristallisiert, dann unter Wärmezufuhr einem Schwitzvorgang unterworfen werden, bei dem die noch verunreinigten kristallisierten Oberflächen angeschmolzen und der angeschmolzene Teil abgeführt wird, ehe die verbleibenden gereinigten Substanzen gewonnen werden.

Es ist bekannt (Chemie-Ingenieur-Technik 57 (1985), S. 97), die Reinigung chemischer Substanzen, zum Beispiel von Essigsäure, durch Schmelzkristallisation in Rohrbündelkristallisatoren durchzuführen. Dabei wird die Eigenschaft ausgenützt, daß Kristalle chemisch reiner als die Ausgangsschmelze sind. Verunreinigungen werden dabei bei der Kristallbildung an die Korngrenzen gedrückt oder verbleiben in einer Restschmelze.

Die bekannten Verfahren arbeiten diskontinuierlich. Die Schmelze kristallisert dabei in einer ersten Stufe an gekühlten Wänden aus. Vor dem Wiederaufschmelzen der nunmehr reinen Kristallschicht erfolgt das sogenannte Schwitzen. Durch Temperaturerhöhung knapp über den Schmelzpunkt erfolgt dabei ein Anschmelzen der noch verunreinigten kristallinen Oberfläche. Das ausschwitzende Produkt läuft ab und wird als Schmelze aufgefangen fangen und abgeführt. Danach erfolgt durch weitere Temperaturerhöhung das Abschmelzen der eigentlichen gereinigten Kristallschicht zur Gewinnung der Endsubstanz.

Mit der nicht vorveröffentlichten EP 0 488 953 A1 ist zwar eine Vorrichtung zur Stofftrennung durch Kristallisation aus einem flüssigen Gemisch vorgeschlagen worden, mit der eine kontinuierliche Arbeitsweise möglich ist. Dort wird aber ein schräg nach oben laufendes Band vorgesehen, das als Kristallationsfläche dient. Die von der kristallisierbaren Substanz weitgehend befreite Mutterlauge fließt über die Kristallschicht nach unten ab. Diese EP 0 488 953 A1 besitzt eine Priorität vom 27.11.90. Sie stellt einen Stand der Technik im Sinn von Artikel 54, Abs. 3 EPÜ dar, da sie zwar am 25.11.91 angemeldet, aber erst am 3.6.92 veröffentlicht worden ist.

Der vorliegenden Erfindung liegt die Aufgabe zugrunde, ein Verfahren und eine Vorrichtung anzugeben, mit denen die Reinigung chemischer Substanzen in der eingangs erwähnten Art kontinuierlich durchgeführt werden kann.

Zur Lösung dieser Aufgabe wird bei einem Verfahren der eingangs genannten Art vorgesehen, daß die geschmolzene Substanz zunächst in Tropfenform gebracht wird und zu Pastillen erstarrt, daß die Pastillen dem Schwitzvorgang in einem Heißgasstrom unterworfen werden, wobei die abschmelzenden Pastillenoberflächen abtropfen und die verbleibenden Pastillen quer zur Abtropfrichtung weggefördert werden. Durch ein solches Verfahren können konstante Bedingungen sehr genau eingehalten werden. Die Reinigung kann daher mit einem guten Wirkungsgrad und sehr wirtschaftlich auch bei einem großen Produktdurchsatz arbeiten. Vorteilhaft wird dabei der Heißgasstrom, der eine Temperatur aufweist, die höher ist als die Schmelztemperatur der Pastillen, senkrecht von unten auf einen durchlässigen Auflageförderer für die Pastillen geführt. Der Heißgasstrom kann dabei nicht nur die erforderliche Erwärmung der Pastillen, sondern auch ein Anheben der Pastillen von ihrer Auflage erreichen, so daß auf diese Weise die gewünschte Abförderung der Pastillen möglich wird.

Zur Durchführung des Verfahrens eignet sich besonders eine Vorrichtung mit den Merkmalen des Anspruches 4, bei der einer Einrichtung zur Herstellung kristalliner Pastillen (oder kristallinem Granulat) ein Behälter zur Aufnahme der Pastillen nachgeschaltet ist, dessen Boden durchlässig ist und mit einer in einer Behälterseitenwand angeordneten Entnahmeöffnung fluchtet, und bei der unterhalb des Bodens eine Strömungsführung für einen Heißgasstrom vorgesehen und der Boden so ausgebildet ist, daß die auf ihm aufliegenden Pastillen in Richtung zur Entnahmeöffnung förderbar sind.

Zweckmäßig und vorteilhaft ist es, wenn der Behälter senkrecht verlaufende Seitenwände aufweist und der Boden als eine schräg zu den Seitenwänden verlaufende perforierte Auflage ausgebildet ist. Die Pastillen können bei einer solchen Ausführungsform auch unter ihrem Eigengewicht zu der Entnahmeöffnung geführt werden. Die Entlastungswirkung des entgegen ihrem Gewicht wirkenden Heißgasstromes macht sich dabei für die Abförderung günstig bemerkbar.

Nach den Merkmalen des Anspruches 6 können sich die Behälterwände vorteilhaft auch unterhalb der perforierten Auflage erstrecken und am unteren Behälterende eine Eintrittsöffnung für den Heißgasstrom bilden. Die Behälterwände können ferner vorteilhaft im Bereich oberhalb des Bodens mit einer Beheizung versehen sein, die eine Temperierung der im Behälter aufgenommenen Pastillenmenge erlaubt. Schließlich kann nach den Merkmalen des Anspruches 8 die Entnahmeöffnung mit einer Schleuse versehen sein, die es erlaubt, einen kontrollierten Pastillenabfluß zu erzielen.

Die Erfindung ist anhand der Zeichnung an einem Ausführungsbeispiel dargestellt und wird im folgenden erläutert. Es zeigen:
- Fig. 1: eine schematische Darstellung einer Vorrichtung zur Durchführung des erfindungsgemäßen Verfahrens und
- Fig. 2: eine vergrößerte Darstellung des Behälters für den Schwitzvorgang aus Fig. 1.

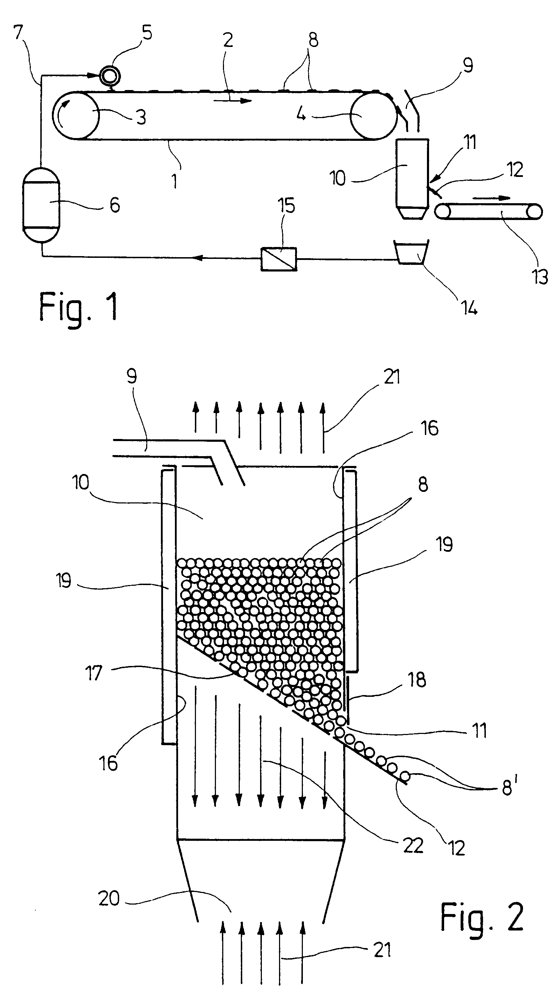

In der Fig. 1 ist schematisch eine Vorrichtung gezeigt, die zur Durchführung des erfindungsgemäßen Verfahrens zum Reinigen chemischer Substanzen dient. Dabei ist ein endloses Kühlband (1) vorgesehen, das in Richtung des Pfeiles (2) umläuft. Innerhalb des Bandumlaufes ist eine nicht gezeigte Kühleinrichtung angeordnet, die beispielsweise aus Sprühdüsen bestehen kann, die eine Kühlflüssigkeit von unten her gegen das obere Trum des Kühlbandes (1) sprühen. Der linken Umlenkwalze (3) der beiden Umlenkwalzen (3 und 4) des endlosen Kühlbandes (19 ist eine Aufgabevorrichtung (5) für eine Schmelze einer chemischen, zur Kristallisation geeigneten Substanz zugeordnet, die beispielsweise in einem Behälter (6) aufbereitet und über eine Leitung (7) der Aufgabevorrichtung (5) zugeführt wird. Die Aufgabevorrichtung (5) kann dabei eine bekannte Tropfenformeinrichtung sein, die beispielsweise mit hin- und hergehenden Nadeln arbeitet, oder die in der Art eines bekannten Rotortropfenformers ausgebildet ist, wie er beispielsweise in der DE-PS 28 53 054 beschrieben ist. Rotortropfenformer dieser bekannten Art arbeiten mit zwei relativ gegeneinander bewegbaren Zylindern, von denen der äußere auf seinem gesamten Umfang perforiert ist und bei seiner Rotation um einen feststehenden Innenzylinder mit seinen Lochreihen zyklisch mit einer Reihe von Öffnungen, mit einem Schlitz oder mit einer Düsenleiste am inneren Zylinder zur Deckung kommt. Die im Inneren dieses Rotortropfenformers befindliche Schmelze wird dabei unter einem bestimmten Druck zyklisch durch die Öffnungen nach außen auf das Kühlband (1) getropft, so daß auf diesem Band jeweils eine Reihe von nebeneinander über die Bandbreite verteilten Tropfen entsteht, die in der Fig. 1 schematisch mit (8) gekennzeichnet sind.

Die in Tropfenform auf dem Kühlband (1) befindliche Schmelze kristallisiert zu festen Pastillen aus, die am Ende des Kühlbandes (1) von dem über die Umlenkwalze (4) laufenden Band (1) abrutschen und in einen Zuführkanal (9) gelangen, der oberhalb von einem Behälter (10) angeordnet ist. In diesem Behälter (10) werden, wie noch anhand der Fig. 2 erläutert werden wird, die Pastillen einer Erwärmung unterworfen, ihre Oberflächen "schwitzen" dabei ab und die verbleibenden gereinigten kristallinen Pastillen verlassen den Behälter (10) über eine Entnahmeöffnung (11) und eine Förderrutsche (12), über die sie dann zum Beispiel auf ein Förderband (13) zur weiteren Verarbeitung gelangen.

Der von den Oberflächen der Pastillen (8) abgeschmolzene, noch relativ verunreinigte Teil der Substanz tropft aus dem Behälter (10) nach unten ab in eine Auffangeinrichtung (14) und kann von dort in nicht näher dargestellter Weise über einen Wärmetauscher (15) zur Wiederaufschmelzung in den Schmelzebehälter (6) zurückgeführt werden.

Der Behälter (10), der das Herzstück der Erfindung ist, besteht dabei aus ringsum angeordneten senkrecht verlaufenden Seitenwänden (16). Der Behälter (10) kann einen rechteckigen Querschnitt aufweisen, der im wesentlichen in seiner Breite der Breite des Kühlbandes (19) entspricht. Schräg zu den senkrechten Seitenwänden (16) ist ein perforierter Boden (17) im Inneren des Behälters angeordnet, der mit einer in einer der Seitenwände angeordneten Entnahmeöffnung (11) fluchtet. Der Entnahmeöffnung (11) ist eine Schleusenkonstruktion (18) zugeordnet, die dafür sorgt, daß aus dem Behälterinneren nur eine kontrollierte Menge von Pastillen (8) nach außen auf die Rutsche (12) gelangt. Der Behälter (10) weist in seinem oberen Bereich eine ringsum angeordnete Beheizung (19) auf, die dafür sorgt, daß die im Behälterinneren ankommenden Pastillen (18) auf einer bestimmten gleichmäßigen Temperatur gehalten werden. Die nach unten über den Boden (17) hinausragenden Teile der Seitenwände (16) bilden eine Eintrittsöffnung (20) für einen Heißgasstrom (21), der von unten her in den Behälter eingeleitet wird und oben, wie schematisch durch die Pfeile angedeutet ist, wieder austritt. Der Heißgasstrom (21) wird auf eine Temperatur gebracht, die ausreicht, um im Bereich des Bodens (17) die Oberflächen der Pastillen (8) anzuschmelzen und sie zum "Schwitzen" zu bringen. Dabei sorgen die Strömungskräfte des Heißgasstromes dafür, daß die an ihren Oberflächen aufweichenden Pastillen im Bereich des Bodens (17) nicht aneinanderkleben, so daß lediglich eine gewisse Oberflächenschicht abschmilzt und diese abgeschmolzenen Mengen in Richtung der Pfeile (22) nach unten aus der Eintrittsöffnung (20) abtropfen. Diese abtropfende Menge wird in der Auffangeinrichtung (14) nach Fig. 1 wieder aufgefangen. Die Pastillen (8'), welche die Entnahmeöffnung verlassen haben, sind daher von ihrer noch etwas verunreinigten Oberfläche befreit und sie stellen daher die zunächst im Behälter (6) befindliche chemische Substanz in fester, aber wesentlich reinerer Form dar. Diese Pastillen können daher einer Weiterverarbeitung unterworfen werden. Es ist auch möglich, sie einem gleichen Reinigungsprozeß noch einmal oder mehrmals zu unterwerfen, wenn das gewünscht sein sollte.

## Patentansprüche

1. Verfahren zum Reinigung chemischer Substanzen, die zunächst geschmolzen und unter Wärmeentzug auskristallisieren, dann unter Wärmezufuhr einem Schwitzvorgang unterworfen werden, bei dem die noch verunreinigten kristallinen Oberflächen angeschmolzen und der angeschmolzene Teil abgeführt wird, ehe die verbleibenden gereinigten Substanzen gewonnen werden, dadurch gekennzeichnet, daß die geschmolzene Substanz zunächst in Tropfenform gebracht wird und zu Pastillen (8) erstarrt und daß die Pastillen dem Schwitzvorgang in einem Heißgasstrom (21), der eine Temperatur aufweist, die höher ist als die Schmelztemperatur der Pastillen, unterworfen werden, wobei die abschmelzenden Pastillenoberflächen abtropfen und die verbleibenden Pastillen quer zur Abtropfrichtung weggefördert werden.

2. Verfahren nach Anspruch 1, dadurch gekennzeichnet, daß der Heißgasstrom senkrecht von unten auf eine durchlässige Förderauflage (17) für die Pastillen auftrifft.

3. Verfahren nach Anspruch 1 oder 2, dadurch gekennzeichnet, daß Temperatur und Strömungsgeschwindigkeit des Heißgasstromes (21) so auf die Größe und die Eigenschaften der Pastillen abgestimmt sind, daß im wesentlichen nur die im Bereich der durchlässigen Förderauflage liegenden Pastillen dem Schwitzvorgang unterworfen werden.

4. Vorrichtung zur Durchführung des Verfahrens nach einem der Ansprüche 1 bis 3, dadurch gekennzeichnet, daß einer Einrichtung zur Herstellung kristalliner Pastillen (oder kristallinem Granulat) ein Behälter (10) zur Aufnahme der Pastillen (8) nachgeschaltet ist, dessen Boden (17) durchlässig ist und mit einer in einer Behälterseitenwand (16) angeordneten Entnahmeöffnung (11) fluchtet, daß unterhalb des Bodens (17) eine Strömungsführung für einen Heißgasstrom (21) vorgesehen und der Boden so ausgebildet ist, daß die auf ihm aufliegenden Pastillen (8) in Richtung zur Entnahmeöffnung (11) förderbar sind.

5. Vorrichtung nach Anspruch 4, dadurch gekennzeichnet, daß der Behälter (10) senkrecht verlaufende Seitenwände aufweist und der Boden (17) als eine schräg zu den Seitenwänden (16) verlaufende, perforierte Auflage ausgebildet ist.

6. Vorrichtung nach einem der Ansprüche 3 oder 4, dadurch gekennzeichnet, daß sich die Behälterwände (16) auch unterhalb des perforierten Bodens (17) erstrecken und am unteren Behälterende eine Eintrittsöffnung (20) für den Heißgasstrom (21) bilden.

7. Vorrichtung nach einem der Ansprüche 3 bis 5, dadurch gekennzeichnet, daß die Behälterwände (16) im Bereich oberhalb des Bodens (17) mit einer Beheizung (19) versehen sind.

8. Vorrichtung nach Anspruch 3, dadurch gekennzeichnet, daß die Entnahmeöffnung (11) mit einer Schleuse (18) versehen ist.

## Claims

1. Process for purifying chemical substances which are first melted and then crystallize out when heat is extracted and then heat is supplied such that chemical substances concerned are subject to a transpiration process in which as yet unpurified crystalline surfaces are melted and this melted part is removed before remaining purified substances are extracted, wherein a melted substance is first applied in a form of drops and solidifies to form pastilles (8) and said pastilles are subjected to a transpiration process in a flow of hot gas (21) having a temperature which is higher than a melting temperature of pastilles concerned, whereby melting surfaces of said pastilles form drops and remaining pastilles are carried away transversely in relation to a direction of falling of these drops.

2. Process in accordance with claim 1, wherein a flow of hot gas is applied vertically from below to permeable conveying equipment (17) for carrying pastilles concerned.

3. Process in accordance with either claim 1 or claim 2, wherein a temperature and speed of flow of a flow of hot gas (21) is determined by a size and properties of pastilles such that essentially only pastilles in an area of permeable conveying equipment are subjected to a transpiration process.

4. Machine for implementing a process in accordance with any of claims 1 to 3, wherein a device for producing crystalline pastilles (or crystalline granules) connects onto a container (10) for uptake of pastilles (8), a base (17) of a said container being permeable and running into an outlet (11) disposed in a lateral wall (16) of a said container, and a flow guide for a flow of hot gas (21) is provided underneath a said base (17) and a said base is developed such that pastilles (8) lying on it can be conveyed in a direction towards a said outlet (1).

5. Machine in accordance with claim 4, wherein a container (10) has lateral walls which run vertically and a base (17) is developed as a perforated support which is inclined in relation to said lateral walls.

6. Machine in accordance with either of claims 3 or 4, wherein lateral walls (16) also extend below a perforated base (17) and form an entrance opening (20) for a flow of hot gas (21) at a lower end of a container concerned.

7. Machine in accordance with any one of claims 3 to 5, wherein container walls (16) are provided with a heating means (19) above a base (17).

8. Machine in accordance with claim 3, wherein an outlet (11) is provided with a gate (18).

## Revendications

1. Procédé de purification de substances chimiques, que l'on fait tout d'abord fondre et qui cristallisent sous l'effet d'un prélèvement de chaleur, et que l'on soumet ensuite, sous l'effet d'un envoi de chaleur, à un processus d'exsudation, selon lequel on provoque un début de fusion des surfaces cristallines encore impures et on évacue la partie qui a commencé à fondre avant d'obtenir les substances purifiées restantes, caractérisé en ce qu'on amène la substance fondue tout d'abord sous la forme de gouttes et qu'on la fait solidifier pour former des pastilles (8), et qu'on soumet les pastilles au processus d'exsudation dans un courant de gaz chaud (21), qui possède une température supérieure à la température de fusion des pastilles, les surfaces, qui fondent, des pastilles s'égouttant tandis que les pastilles restantes sont évacuées transversalement par rapport à la direction d'égouttage.

2. Procédé selon la revendication 1, caractérisé en ce que le courant de gaz chaud rencontre, perpendiculairement à partir du bas, un support transparent (17) d'entraînement pour les pastilles.

3. Procédé selon la revendication 1 ou 2, caractérisé en ce que la température et la vitesse d'écoulement du courant de gaz chaud (21) sont réglées sur la taille et les caractéristiques des pastilles de telle sorte que essentiellement seules les pastilles, qui sont situées dans la zone du support d'entraînement transparent, sont soumises au processus d'exsudation.

4. Dispositif pour la mise en oeuvre du procédé selon l'une des revendications 1 à 3, caractérisé en ce qu'en aval d'un dispositif servant à fabriquer des pastilles cristallines (ou des granulés cristallins) est disposé un récipient (10) servant à recevoir les pastilles (8) et dont le fond (17) est transparent et est aligné avec une ouverture de prélèvement (11), qui est aménagée dans une paroi latérale (16) du récipient, et qu'au-dessous du fond (17) est disposé un système de guidage de l'écoulement pour un courant de gaz chaud (21), et le fond est agencé de telle sorte que les pastilles (8), qui sont appliquées sur le fond, peuvent être entraînées en direction de l'ouverture de prélèvement (11).

5. Dispositif selon la revendication 4, caractérisé en ce que le récipient (10) possède des parois latérales perpendiculaires et que le fond (17) est agencé sous la forme d'un support perforé, qui s'étend obliquement par rapport aux parois latérales (16).

6. Dispositif selon l'une des revendications 3 ou 4, caractérisé en ce que les parois (16) du récipient s'étendent également au-dessous du fond perforé (17) et forment, à l'extrémité inférieure du récipient, une ouverture d'entrée (20) pour le courant de gaz chaud (21).

7. Dispositif selon l'une des revendications 3 à 5, caractérisé en ce que les parois (16) du récipient comportent un dispositif de chauffage (19) dans la zone située au-dessus du fond (17).

8. Dispositif selon la revendication 3, caractérisé en ce que l'ouverture de prélèvement (11) est équipée d'un sas (18).
